# EUROPEAN PATENT APPLICATION

(11) **EP 2 273 329 A1**
(43) Date of publication of application: **12.01.2011**
(21) Application number: 09163593.8
(22) Date of filing: 24.06.2009
(51) Int. Cl.: G05B 19/042, G06F 11/34, G06F 11/36

(54) **Microcontroller protection method and apparatus comprising an on-circuit debugging module**

(71) Applicant: Delphi Technologies Holding S.à.r.l., 4940 Bascharage (LU)
(72) Inventor: Walker, Darren, Lower Halling, Kent ME2 1ET (GB); Gillham, Alastair, Maidstone, Kent ME15 7HY (GB)
(74) Representative: Gregory, John David Charles

(57) **Abstract**

A method of detecting use of a shared resource within an ECU microcontroller, the microcontroller comprising at least one software element, a shared resource and an on-circuit debugging module, the method comprising: monitoring the shared resource with the debugging module for pre-defined write operations from the at least one software element; detecting a pre-defined write operation to the shared resource from the at least one software element.

## Description

### Field of the Invention

The present invention relates to a microcontroller protection method and apparatus. In particular the present invention relates to the integration of software onto microcontrollers found within vehicle engine control units (ECUs) and the detection and prevention of unauthorised actions by the integrated software.

### Background to the Invention

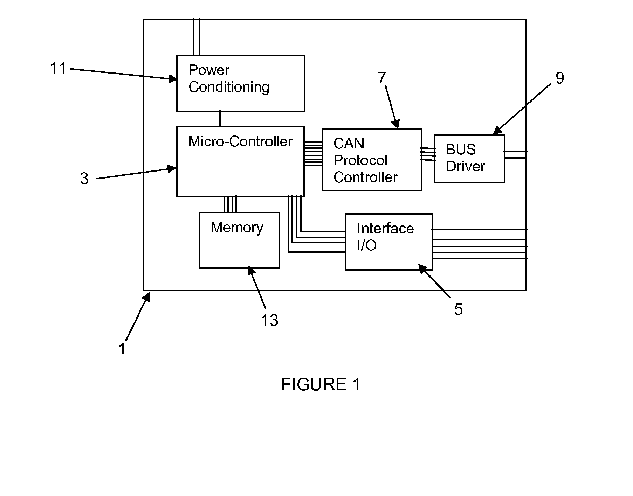

Figure 1 shows the components found within a typical ECU 1. Referring to the figure it can be seen that the ECU 1 comprises a microcontroller 3 (Note: although only one microcontroller is shown here the ECU may comprise multiple microcontrollers), an input/output interface 5 (I/O interface), a communication chip 7 (CAN protocol controller) and associated bus driver module 9, a power conditioning module 11 and a memory module 13.

The I/O interface 5 comprises inputs from, for example, engine sensors and other vehicle sensors and outputs to, for example, the vehicle's fuel injectors and driver displays. The communication chip 7 implements the various communication standard that is used in the vehicle. In this example, a controller area networking chip (CAN) is shown.

The power conditioning module 11 is arranged to adjust inputs or outputs before they are read by the microcontroller.

The microcontroller 3 comprises an operating system which runs a number of software modules that may control various vehicle functions such as injection timing, fuel injection amounts as well as monitor the health of the vehicle (and check for faults). Some of these software modules may be proprietary to the ECU manufacturer or supplier whereas other software elements may be third party software (e.g. customer supplied control strategies or CAN (Controller Area Network) libraries).

During the design and validation phase of the development of the microcontroller all installed software will be verified as far as possible. However, it is noted that, especially for third party software that has been supplied in binary (object) format, normal verification approaches such as code reviews, unit test and static analysis are not always possible. Therefore, during normal operation of the ECU/microcontroller (i.e. use of the production unit within the vehicle) there exists the potential for the onboard software to cause errors or corrupt other software/algorithms or even other hardware elements as a result of undetected or unverified errors within the software code.

It is therefore an object of the present invention to overcome or substantially mitigate the above mentioned problems.

### Summary of the Invention

According to a first aspect of the invention there is provided a method of detecting use of a shared resource within an ECU microcontroller, the microcontroller comprising at least one software element, a shared resource and an on-circuit debugging module, the method comprising: monitoring the shared resource with the debugging module for pre-defined write operations from the at least one software element; detecting a pre-defined write operation to the shared resource from the at least one software element.

The present invention utilises an on-circuit debugging module during pre-production integration of software into the microcontroller and also during the production phase to detect unauthorised software operations. Essentially, the debugging module is used to conceptually partition any critical areas of the microcontroller, e.g. any shared resources such as RAM or special function registers.

Conveniently, the monitoring step may comprise monitoring the shared resource during a pre-production phase of the development lifecycle of the microcontroller. Further, the monitoring step may comprise monitoring the shared resource during a production or implementation phase of the development lifecycle of the microcontroller.

The microcontroller may comprise an operating system and preferably the method may further comprise the step of instructing the debugging module of the pre-defined write operations to be monitored using the microcontroller's operating system. It is noted that where the debugging module is designed for use during a design and development phase of the lifecycle of the microcontroller, it may be subsequently re-tasked by the operating system to monitor the shared resource.

Preferably, the method further comprises the step of notifying the operating system when a pre-determined write operation is detected. Further, the method may comprise performing a detection action following notification of a pre-determined write operation. The detection action may comprise one or more of: resetting the ECU; outputting a notification signal; reverting the microcontroller to an earlier state.

Conveniently, the shared resource may be: a RAM resource on the microcontroller; a special function register resource on the microcontroller; an addressable memory space on the microcontroller.

Preferably, the pre-defined write operation to be monitored is a write action from the at least one software element to the shared resource. Alternatively or additionally, the pre-defined write operation to be monitored may be an advance notification message from the at least one software element of the intention to write to the shared resource.

According to a second aspect of the invention there is provided a microcontroller within an ECU comprising: at least one software element; an operating system; a shared resource and an on-circuit debugging module, wherein the debugging module is arranged to monitor the shared resource for pre-defined write operations from the at least one software element and, upon detection of the pre-defined write operation, is arranged to output a notification signal to the operating system.

It is noted that the second aspect of the present invention may comprise the preferred features of the first aspect of the present invention.

### Brief Description of the Drawings

The invention will now be described by way of example only with reference to the accompanying drawings, in which:
Figure 1 (described above) shows a representation of a typical engine control unit;
Figure 2 shows a representation of the component parts of a microcontroller;
Figure 3 is a memory map of the RAM module within the microcontroller of Figure 2;
Figure 4 is a flow chart showing a method of detecting unauthorised use of a shared resource in accordance with an embodiment of the present invention.

### Detailed Description of the Invention

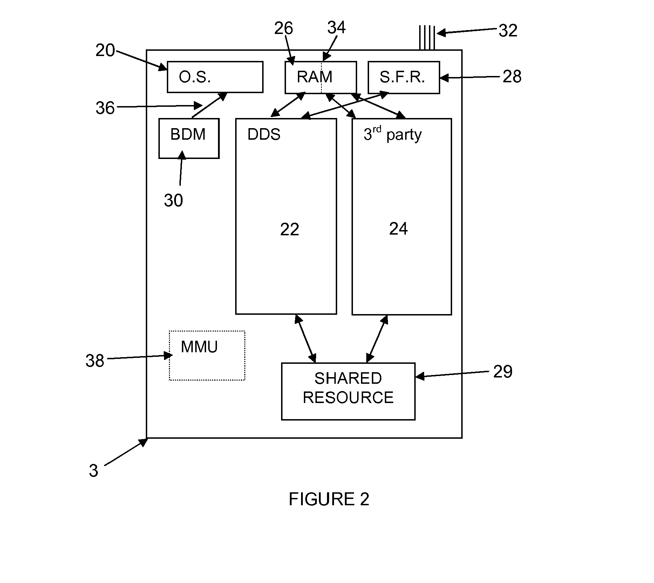

Turning to Figure 2, a microcontroller 3 in accordance with an embodiment of the present invention is shown. The microcontroller in question is the strategy software microcontroller within the ECU 1. It will however be appreciated that the invention as described below may be applied to any microcontroller within the ECU.

The microcontroller 3 comprises a basic operating system (represented by element 20), two software elements (22 and 24) where the first software element 22 represents software proprietary to the ECU manufacturer/supplier and the second software element 24 represents software supplied by a third party.

The microcontroller also comprises a RAM memory module 26 and a special function register module 28, both of which are shared resources and accessible by both software elements 22, 24. A further generic shared resource 29, e.g. a RAM region that is shared with other microcontrollers, is also shown in Figure 2.

An on circuit debugging module 30 is also present within the microcontroller 3. Such modules (e.g. the Motorola ® produced background debugging monitor) provide an in-circuit debugging functionality and are used during the development phase of the microcontroller by developers to ensure that application programs (such as software 22, 24) are properly integrated into the microcontroller environment. At the end of the development phase of the microcontroller such debugging modules are traditionally "switched off" and take no further part in the operation of the microcontroller.

Input and output pins 32 connect the microcontroller to the rest of the ECU and other ECU components such as the conditioning module 11 and communication chip 7. It is noted that the debugging module 30 also comprises input and output connections which are used during the development phase but which are then depopulated (capped off) for the production phase.

As discussed above if the verification of the software elements 22 and 24 is incomplete in any way there exists the possibility that such software elements could have unforeseen and unwanted side effects on the rest of the microcontroller. In particular, third party software is often delivered as object code which makes comprehensive verification during the development phase more difficult.

The present invention resides in the use of the debugging module 30 during pre-production integration of software into the microcontroller and also during the production phase to detect unauthorised software operations. Essentially, the debugging module and operating system of the microcontroller are used to conceptually partition any critical areas of the microcontroller, e.g. any shared resources such as RAM (partition 34) or special function registers. In an embodiment of the present invention therefore the debugging module 30 is used to detect write operations from software (and to notify the operating system 20 which can then take appropriate action).

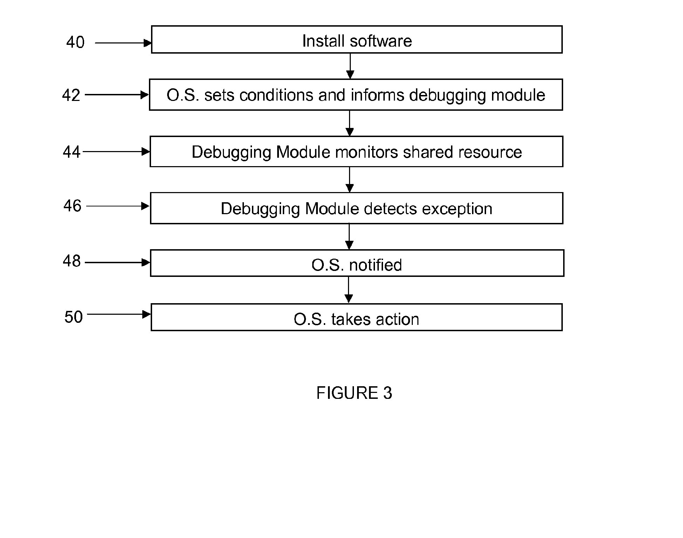

The flow chart of Figure 3 depicts a method of detecting unauthorised activity in accordance with an embodiment of the present invention. In Step 40 the software is installed onto the microcontroller.

In Step 42 the operating system is configured to set the parameters that define unauthorised activity to a given shared resource on the microcontroller and to communicate these parameters to the debugging module. For example, the operating system may define a certain level of RAM usage that a given software element is to use. Alternatively, the operating system may define certain memory addresses, special function registers, as "off limits" to particular software elements on the microcontroller.

In Step 44 the debugging module monitors the shared resources (26, 28, 29).

In Step 46 the debugging module detects a write action that is unauthorised and in Step 48 informs the operating system via notification signal 36.

In Step 50 the operating system may take an appropriate action, e.g. stop the engine, revert to an earlier microcontroller state or raise a fault output signal.

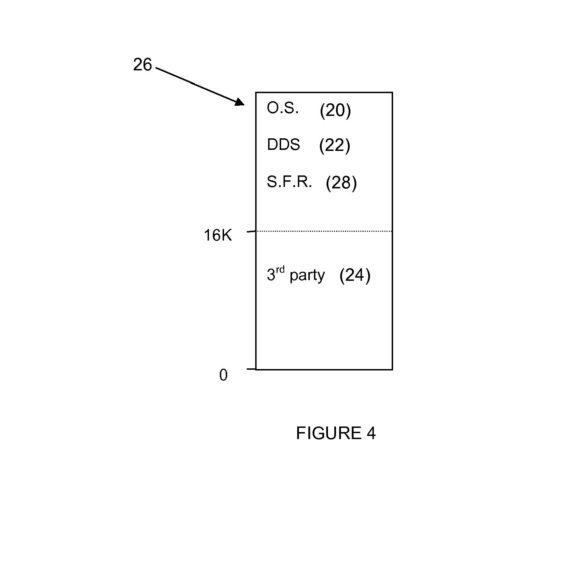

Figure 4 depicts a memory map for the RAM resource within the microcontroller 3. It can be seen that the third party software element 24 on the microcontroller has been allocated 16K of memory. The remaining available RAM is used by the operating system 20, the first software element 22 and the special function register 28.

In this example, the debugging module 30 may monitor RAM usage by the second software element 24 and in the event that more than 16K of resources are used by the element it may notify the operating system (Step 48).

In alternative embodiments the debugging module 30 may monitor special function registers 28 (e.g. peripheral control registers) and in particular may monitor whether any software elements are writing to the addressable memory regions of such registers.

In a yet further embodiment the debugging module may monitor RAM regions that are shared with or read to/by other microcontrollers. In the event that a software element writes to such an area it could have a serious impact upon the operation of the ECU and could force a shut down of the engine. The debugging module may therefore be conveniently used to monitor such areas in use to detect unauthorised write operations.

When the debugging module notifies the operating system of an exception a log of the activity may be taken. This has the advantage of providing a clear audit trail to a software developer to facilitate redesign/recoding of the software element that was responsible for the exception. The log may be stored within non-volatile memory on the ECU.

It is noted that some software elements will signal an intention to write to a given memory region before the write action actually takes place. In such circumstances the debugging module may be able to signal the operating system such that preventative action can be taken, e.g. to disable the software element or to override the intended write action.

It is noted that not all of the microcontroller input/output pins are allocated during normal use and that consequently there will be spare pins available with which to interrogate the debugging module, e.g. during a maintenance or diagnostic function.

As noted above the debugging module is an on circuit device that is already present on the microcontroller. By using the debugging module it is possible to segment the memory of a microcontroller that doesn't natively support memory segmentation. It also advantageously avoids the need for a specialist memory management unit 38 to be located on the microcontroller.

It will be understood that the embodiments described above are given by way of example only and are not intended to limit the invention, the scope of which is defined in the appended claims. It will also be understood that the embodiments described may be used individually or in combination.

## Claims

1. A method of detecting use of a shared resource within an ECU microcontroller (3), the microcontroller comprising at least one software element (22, 24), a shared resource (26, 28, 29) and an on-circuit debugging module (30), the method comprising:
monitoring (44) the shared resource with the debugging module for pre-defined write operations from the at least one software element;
detecting (46) a pre-defined write operation to the shared resource from the at least one software element.

2. A method as claimed in Claim 1, wherein the monitoring step comprises monitoring the shared resource during a pre-production phase of the development lifecycle of the microcontroller.

3. A method as claimed in Claim 1 or Claim 2, wherein the monitoring step comprises monitoring the shared resource during a production or implementation phase of the development lifecycle of the microcontroller.

4. A method as claimed in any preceding claim, wherein the microcontroller comprises an operating system (20) and the method further comprises the step of instructing the debugging module of the pre-defined write operations to be monitored using the microcontroller's operating system.

5. A method as claimed in Claim 4, wherein the debugging module is designed for use during a design and development phase of the lifecycle of the microcontroller and is subsequently re-tasked by the operating system to monitor the shared resource.

6. A method as claimed in any preceding claim, further comprising the step of notifying (48) the operating system when a pre-determined write operation is detected.

7. A method as claimed in Claim 6, further comprising performing a detection action (50) following notification of a pre-determined write operation.

8. A method as claimed in Claim 7 wherein the detection action comprises one or more of: resetting the ECU; outputting a notification signal; reverting the microcontroller to an earlier state.

9. A method as claimed in any preceding claim, wherein the shared resource is a RAM resource (26) on the microcontroller.

10. A method as claimed in any preceding claim, wherein the shared resource is a special function register resource (28) on the microcontroller.

11. A method as claimed in any preceding claim, wherein the shared resource is an addressable memory space on the microcontroller.

12. A method as claimed in any preceding claim, wherein the pre-defined write operation to be monitored is a write action from the at least one software element to the shared resource.

13. A method as claimed in any preceding claim, wherein the pre-defined write operation to be monitored is an advance notification message from the at least one software element of the intention to write to the shared resource.

14. A microcontroller within an ECU comprising:
at least one software element (22, 24);
an operating system (20);
a shared resource (26, 28) and
an on-circuit debugging module (30),
wherein the debugging module is arranged to monitor the shared resource for pre-defined write operations from the at least one software element and, upon detection of the pre-defined write operation, is arranged to output a notification signal to the operating system.

## Amended claims

### Amended claims in accordance with Rule 137(2) EPC.

**1.** A method of detecting use of a shared resource within an ECU microcontroller (3), the microcontroller comprising at least one software element (22, 24), the shared resource (26, 28, 29) and an on-circuit debugging module (30), the method comprising:
monitoring (44) the shared resource with the debugging module for write operations from the at least one software element;
detecting (46) with the debugging module an unauthorised write operation to the shared resource from the at least one software element.

**2.** A method as claimed in Claim 1, wherein the monitoring step comprises monitoring the shared resource during pre-production integration of software into the microcontroller.

**3.** A method as claimed in Claim 1 or Claim 2, wherein the monitoring step comprises monitoring the shared resource during a production or implementation phase of the development lifecycle of the microcontroller.

**4.** A method as claimed in any preceding claim, wherein the microcontroller comprises an operating system (20) and the method further comprises the step of instructing the debugging module of the unauthorised write operations to be monitored using the microcontroller's operating system.

**5.** A method as claimed in Claim 4, wherein the debugging module is designed to provide software integration functionality during design and development of the microcontroller, the module being subsequently re-tasked by the operating system to monitor the shared resource.

**6.** A method as claimed in any preceding claim, further comprising the step of notifying (48) an operating system when the unauthorised write operation is detected.

**7.** A method as claimed in Claim 6, further comprising performing a detection action (50) following notification of the unauthorised write operation.

**8.** A method as claimed in Claim 7 wherein the detection action comprises one or more of: resetting the ECU; outputting a notification signal; reverting the microcontroller to an earlier state.

**9.** A method as claimed in any preceding claim, wherein the shared resource is a RAM resource (26) on the microcontroller.

**10.** A method as claimed in any preceding claim, wherein the shared resource is a special function register resource (28) on the microcontroller.

**11.** A method as claimed in any preceding claim, wherein the shared resource is an addressable memory space on the microcontroller.

**12.** A method as claimed in any preceding claim, wherein the unauthorised write operation to be monitored is a write action from the at least one software element to the shared resource.

**13.** A method as claimed in any preceding claim, wherein the unauthorised write operation to be monitored is an advance notification message from the at least one software element of the intention to write to the shared resource.

**14.** A microcontroller for use within an ECU, the microcontroller comprising:
at least one software element (22, 24);
an operating system (20);
a shared resource (26, 28) and
an on-circuit debugging module (30),
wherein the debugging module is arranged to monitor the shared resource for write operations from the at least one software element and, upon detection of an unauthorised write operation, is arranged to output a notification signal to the operating system.
